Europäisches Patentamt

European Patent Office

Office européen des brevets

(19)

(11) Veröffentlichungsnummer: **0 012 706**
A1

(12) **EUROPÄISCHE PATENTANMELDUNG**

(21) Anmeldenummer: **79710012.0**

(22) Anmeldetag: **04.12.79**

(51) Int. Cl.³: **A 61 C 9/00**, B 01 F 9/00

(30) Priorität: **11.12.78 DE 2853383**

(43) Veröffentlichungstag der Anmeldung: **25.06.80**
**Patentblatt 80/13**

(84) Benannte Vertragsstaaten: **AT BE CH FR GB IT NL**

(71) Anmelder: **Firma Kurt Girardelli jun. Dent. med. Geräte, Robert-Koch-Strasse 13, D-7750 Konstanz (DE)**

(72) Erfinder: **Giradelli, Kurt, Robert-Koch-Strasse 13, D-7750 Konstanz (DE)**

(74) Vertreter: **Hiebsch, Gerhard F.,Dipl.-Ing., Postfach 464 Erzberger Strasse 5A, D-7700 Singen (DE)**

(54) Vorrichtung zum Kneten dentaler Abdruckmassen.

(57) Vorrichtung zum Kneten dentaler Abdruckmassen mit einem Mischbecher (7). Um eine derartige Vorrichtung zu schaffen, welche kostengünstig hergestellt werden kann sowie ein einfaches und hygienisches Arbeiten und ein leichtes Reinigen erlaubt, wird der Mischbecher (7) drehbar gelagert und in ihm wenigstens eine Welle (6) angeordnet, welche aus einem – an einem den Mischbecher (7) aufnehmenden Sockelkasten (1) – angelenkten Antriebsgehäuse (4) oder Antrieb ragt und gegebenenfalls auch gegen die Drehrichtung des Mischbechers (7) drehbar ist. Dabei soll letzterer lösbar in einer napfartigen Halterung (8) sitzen, welche mit einem von einem Antrieb (13) drehbaren Wellenstumpf (10) verbunden ist und aus welcher der Mischbecher (7) einerseits leicht gelöst werden kann sowie anderseits während der Rotation festsitzt.

ACTORUM AG

# DIPL.-ING. GERHARD F. HIEBSCH

## PATENTANWALT

0012706

PROFESSIONAL REPRESENTATIVE BEFORE THE EUROPEAN PATENT OFFICE

MANDATAIRE AGRÉÉ PRÈS L'OFFICE EUROPÉEN DES BREVETS

Firma Kurt Giradelli jun.
============================

Dent.-med. Geräte
==================

Robert-Koch-Straße 13
========================

7750 Konstanz
===============

D-7700 SINGEN 1
Erzbergerstr. 5a
Postfach 464
Telegr./Cables:
Bodenseepatent
Telex 7 93 850
Telefon (0 77 31) 6 11 35

Mein Zeichen
My ref./Ma réf.: G-112 /EPA

I/ke
Datum/Date

## Vorrichtung zum Kneten dentaler Abdruckmassen

Die Erfindung betrifft eine Vorrichtung zum Kneten dentaler Abdruckmassen mit einem Mischbecher od. dgl. - gegebenenfalls aus flexiblem Werkstoff.

Bislang werden alle in der Dentalindustrie gebräuchlichen Abdruckmassen von Hand angerührt. Hierzu wird die Abdruckmasse in einen Becher aus Gummi oder Kunststoff zusammen mit einem Härter eingebracht; beide Komponenten werden mit einer Spachtel oder einem ähnlichen Instrument etwa 30 Sekunden lang vermischt. Diese Mischzeit wird -- in sehr ungenauer Weise -- durch einfaches Abzählen der Zahlen von 1 bis 30 ermittelt, weshalb es meist nicht zu einer Vergleichmäßigung des Mischgutes kommt.

-2-

Die durch diesen Mischvorgang entstehende Masse
wird nochmals mit den Händen geknetet, anschließend
in einen Abdrucklöffel gepreßt und dann dem
Patienten zur Abnahme eines Abdruckes in den Mund
geführt.

Zum einen muß es als recht unhygienisch angesehen
werden, die Abdruckmassen zwischen den Händen zu
kneten, zum anderen haftet die Masse an den Fingern
und unter den Fingernägeln, durch Spritzer des
Härters werden die Arbeitskleider der Helferinnen
des Zahnarztes in Mitleidenschaft gezogen. Darüber
hinaus muß nach dem Arbeitsgang der Mischnapf mit
samt der Spachtel gereinigt werden.

Es ist bereits vorgeschlagen worden, mechanische Abdruckmassenmischer herzustellen, welche in der Art
einer Zentrifuge arbeiten. Solche Maschinen sind
sowohl in ihrer Herstellung als auch im Hinblick auf
die Wartung und Reinigung sehr teuer.

Angesichts dieser Gegebenheiten hat sich der Erfinder das Ziel gesetzt eine Vorrichtung der eingangs
erwähnten Art zu schaffen, welche kostengünstig hergestellt werden kann, ein einfaches und hygienisches
Arbeiten und ein leichtes Reinigen erlaubt.

Zur Lösung dieser Aufgabe führt, daß der Mischbecher
drehbar gelagert und in ihm wenigstens eine Welle angeordnet ist, welche aus einem -- an einem den
Mischbecher aufnehmenden Sockelkasten -- angelenkten Antriebsgehäuse oder Antrieb ragt und gegebenenfalls auch gegen die Drehrichtung des Mischbechers
drehbar ist. Dabei soll letzterer lösbar in einer
napfartigen Halterung sitzen, welche mit einem von
einem Antrieb drehbaren Wellenstumpf verbunden ist
und aus welcher der Mischbecher einerseits leicht
gelöst werden kann sowie anderseits während der
Rotation festsitzt.

Als besonders günstig hat es sich erwiesen, einen
Wegwerfbecher aus Pappe zu verwenden, der ohne
Schwierigkeiten in die Halterung eingesetzt und aus
ihr entfernt werden kann.

Nach einem weiteren Merkmal der Erfindung ist der
Wellenstumpf und damit die Halterung zur Stellfläche
der Vorrichtung geneigt, und zwar bevorzugtermaßen in
einem Winkel von etwa 70$^{\circ}$; diese Neigung des Mischbechers führt dazu, daß sich das Mischgut stets an die
tiefste Stelle des Bechers verlagert, an welcher auch
die Knet- oder Mischwelle angreift.

Ein besonders guter Kneteffekt wird dann erreicht,
wenn man die von Haushaltsgeräten her bekannte Anordnung zweier paralleler Knetwellen verwendet, welche an ihrem freien Ende schraubenlinienförmige Ausformungen aufweisen, die ineinandergreifen und bevorzugtermaßen gegenläufig zueinander gedreht werden.

Um eine Art Taumelbewegung der Knetwelle/n im Knet- oder Mischbecher zu erreichen, liegt das Antriebsgehäuse erfindungsgemäß in der Bewegungsbahn einer von einer Welle gedrehten Nockenscheibe, von deren Nocke das Antriebsgehäuse periodisch angehoben und abgesenkt wird. Während dieses Hubvorganges bewegt sich entsprechend die Knetwelle im Becher von der einen Wandungsseite zur anderen; diese Taumelbewegung überlagert die beiden anderen Bewegungsbahnen des Mischgutes, zum einen die Drehung des Bechers, zum anderen das Abgleiten des Mischgutes am schrägen Becherboden nach unten.

Somit wird das Hubmaß für das von der Nockenscheibe periodisch angehobene Antriebsgehäuse vom Durchmesser des die Welle/n -- und gegebenenfalls deren Ausformungen -- umgebenden Becherteiles bestimmt, da erfindungsgemäß der Hub so groß sein soll, daß das Knetende der Welle -- querschnittlich gesehen -- die beiden einander gegenüberliegenden Seiten der Becherwandung erreicht, jedoch nicht berührt.

Als besonders günstig hat es sich erwiesen, die napfartige Halterung in einer Mulde des Sockelkastens und das Antriebsgehäuse auf einer Tragsäule vorzusehen, deren oberer Fläche das Antriebsgehäuse in seiner Ruhelage teilweise aufliegt.

Aus der oberen Fläche der Tragsäule ragt die Nockenscheibe während ihrer Umdrehung mit dem Nocken
heraus und hebt dabei das angelenkte Antriebsgehäuse an, was die bereits beschriebene Taumelbewegung der Knetwellen erzeugt. Durch eine erfindungsgemäß sanfte Ausgestaltung der Nockenflanken wird
erreicht, daß das Antriebsgehäuse langsam angehoben
und wieder abgesenkt, also eine plötzliche Bewegung
vermieden wird.

Im Rahmen der Erfindung liegt es, alle beschriebenen
Bewegungen der Vorrichtung von einem gemeinsamen
Antrieb aus zu steuern, welchem noch eine Zeitsteuereinrichtung zur Vorwahl der Mischzeit zugeordnet sein soll.

Günstiger jedoch erscheint es, zumindest den Rührwerksmotor getrennt auszugestalten und sein Gehäuse
lediglich durch das erwähnte Scharnier mit dem Sockelkasten zu verbinden. Auch ist es technisch einfacher,
die Nockenscheibe einerseits und die Halterung für
den Mischbecher andererseits an getrennte Antriebe
anzuschließen und mit einem gemeinsamen Schalter in
Bewegung zu setzen.

Dank der vorstehenden Maßgaben wird ein außerordentlich gutes Durchkneten und Durchmischen des Mischgutes -- einerseits durch zwei gegeneinanderlaufende
Rührspiralen sowie anderseits durch die Drehung des
Mischbechers mit beispielsweise 15 Umdrehungen pro
Minute -- erzielt. Die Knetarbeit wird erleichtert
durch die Bewegung der Rührspiralen innerhalb des Mischbechers dank der Nockenscheibe und der von ihr
aus gelösten Bewegung des Antriebsgehäuses.

Die elektronische Zeitsteuerung ermöglicht,den Mischvorgang äußerst genau zu regulieren, erfindungsgemäß bevorzugt in Intervallen von 20 bis 60 Sekunden
oder bei Dauerlauf.

Außerdem ergibt sich bei dieser Vorrichtung eine einfache Reinigungsmöglichkeit durch die Herausnahme
der Rührspiralen oder Wellen, welche vorteilhafterweise aus poliertem Stahl bestehen, an welchem die
Abdruckmasse nicht haftet.

Durch die Verwendung eines Wegwerfbechers erübrigt
sich die Verwendung aufwendiger Mischbecher aus
Porzellan oder Gummi.

Weitere Vorzüge der Vorrichtung sind in deren geringem Platzbedarf (Grundfläche beispielsweise 15 cm
x 30 cm), ihr geringes Gewicht von etwa 2,5 kg. Der
geringe Stromverbrauch beträgt etwa 130 Watt.

Die Vorrichtung ist für alle handelsüblichen Abdruckmassen verwendbar, da die Mischzeiten individuell eingestellt werden können.

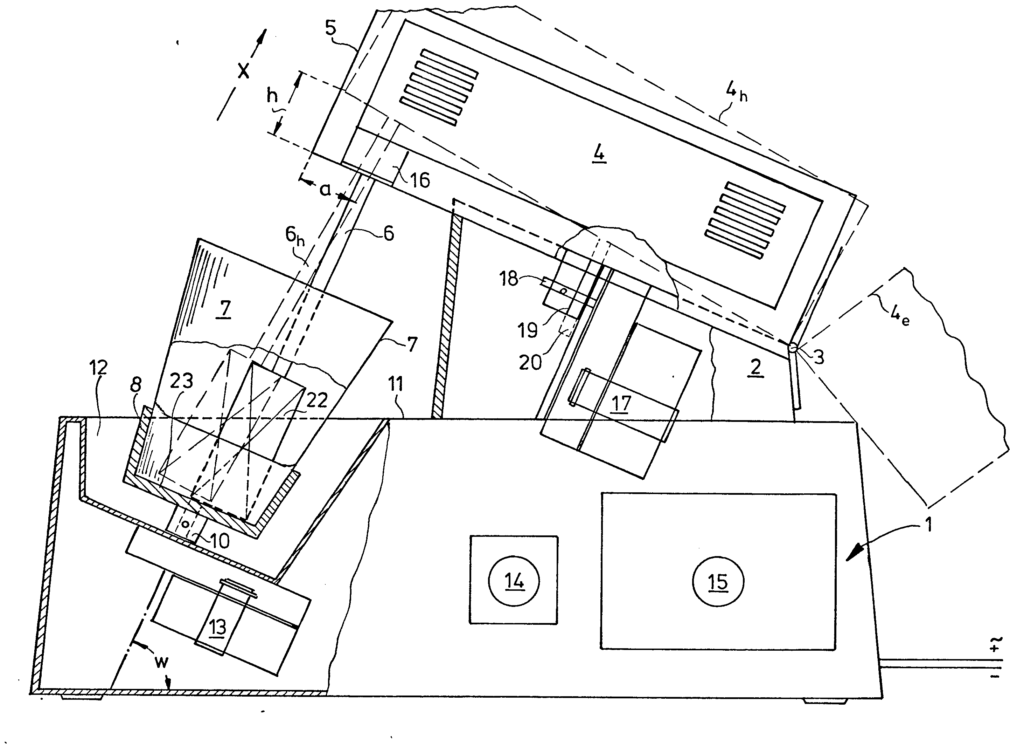

Weitere Vorteile, Merkmale und Einzelheiten der Erfindung ergeben sich aus der nachfolgenden Beschreibung eines bevorzugten Ausführungsbeispiels sowie
anhand der Zeichnung, deren einzige Figur einen
schematisierten Längsschnitt durch eine erfindungsgemäße Vorrichtung wiedergibt.

Auf einem Sockelkasten 1 ist an einer Tragsäule 2 mittels
eines Scharniers 3 ein Antriebsgehäuse 4 angelenkt, welches einen -- in der Zeichnung übersichtlichkeitshalber
nicht erkennbaren -- Rührwerksmotor aufnimmt.

Unterhalb der dem Scharnier 3 fernen Stirnseite 5, und
zu ihr im Abstand a von beispielsweise 20 mm, ragt aus
dem Antriebsgehäuse 4 zumindest eine Welle 6 in einen
Becher 7, der seinerseits austauschbar in einem napfartigen Drehhalter 8 ruht. Dieser ist mit seinem -- zum
Sockelboden 9 in einem Winkel w von beispielsweise
70$^{\circ}$ geneigten -- Wellenstumpf 10 in einer in den
Sockeldeckel 11 eingeformten Mulde 12 untergebracht.
Unterhalb dieser Mulde 12 ist bei 13 ein Getriebemotor
angedeutet, welcher den Wellenstumpf 10, und damit den
Becher 7, mit zum Beispiel fünfzehn U/min. in Rotation
versetzt.

Außerdem sind in bzw. an dem Sockelkasten 1 ein Drucktastenschalter 14 zur Inbetriebnahme der Antriebe angebracht sowie eine elektrische Zeitsteuerung 15, welche die Drehzeit der -- bei 16 lösbar angesteckten --
Welle 6 von etwa 20 bis 60 Sekunden (oder bis zum Dauerlauf) reguliert. In der Tragsäule 2 sitzt zudem ein weiterer Getriebemotor 17 der eine Welle 18 mit daran festliegender Nockenscheibe 19 antreibt. Letztere hebt mit ihrem Hubnocken 20 das angelenkte Antriebsgehäuse 4 bei jeder Wellendrehung in Pfeilrichtung x einmal um die an der Welle 6 gemessene Strecke h von etwa 15 mm an, dies etwa 20 mal je Minute. In der Zeichnung ist die obere Lage des Antriebsgehäuses 4 durch die gestrichelte Kontur $4_h$ angedeutet.

Zum Befüllen des Bechers 7 mit den Komponenten einer zu knetenden Masse kann das Antriebsgehäuse 4 mit seiner Welle 6 etwa in die angedeutete Position $4_e$ abgeklappt werden und gibt damit den Becher 7 völlig frei.

Sind die Komponenten des zu mischenden Gutes in den Becher 7 eingebracht, wird das Antriebsgehäuse 4 abgesenkt, mit ihm gelangt die Welle 6 und die an ihrem unteren Ende vorgesehene Ausformung 22 in den Mischbecher 7, und zwar bis zu dessen Boden 23. Bei einem nicht dargestellten Ausführungsbeispiel sind in das Antriebsgehäuse 4 zwei zueinander parallele Wellen 6 eingesteckt, deren untere Ausformungen 22 korkenzieherartig ausgeführt sind und ineinandergreifen.

Nun wird der Rührwerksmotor -- gleichzeitig auch die Getriebemotoren 13,17 -- eingeschaltet und die Zeit durch die Zeitsteuerung 15 vorgewählt. Das Antriebsgehäuse 4 und die Welle/n 6 werden durch die Nockenscheibe 19 periodisch angehoben, und zwar in den
aus der Zeichnung erkennbaren Grenzen. Hierdurch
wird die gesamte Fläche des Becherbodens 23 durch
die Ausformung 22 überstrichen und das Mischgut
auch in den Randbereichen geknetet.

PATENTANSPRÜCHE
=================================

1. Vorrichtung zum Kneten dentaler Abdruckmassen mit einem
   Mischbecher od. dgl. gegebenenfalls aus flexiblem Werkstoff,

   dadurch gekennzeichnet,

   daß der Mischbecher (7) drehbar gelagert und in ihm wenigstens eine Welle (6) angeordnet ist, welche aus einem an
   einem den Mischbecher aufnehmenden Sockelkasten (1) angelenkten Antriebsgehäuse (4) oder Antrieb ragt und gegebenenfalls auch gegen die Drehrichtung des Mischbechers
   drehbar ist.

2. Vorrichtung nach Anspruch 1, dadurch gekennzeichnet, daß
   der Mischbecher (6) lösbar in einer napfartigen Halterung (8) sitzt, welche mit einem von einem Antrieb (13)
   drehbaren Wellenstumpf (10) verbunden ist.

3. Vorrichtung nach Anspruch 2, dadurch gekennzeichnet, daß
   der Wellenstumpf (10) zur Stellfläche (9) der Vorrichtung
   geneigt verläuft, wobei der Neigungswinkel (w) zwischen
   Stellfläche und Wellenstumpf bevorzugt etwa $50^{\circ}$ bis $80^{\circ}$
   beträgt.

4. Vorrichtung nach einem der Ansprüche 1 bis 3, dadurch gekennzeichnet, daß das Antriebsgehäuse (4) in die Bewegungsbahn einer von einer Welle (18) drehbaren Nockenscheibe (19) ragt und von deren Nocke (20) anhebbar ist.

5. Vorrichtung nach einem der Ansprüche 1 bis 4, dadurch gekennzeichnet, daß die mit dem Antriebsgehäuse (4) gegebenenfalls lösbar verbundene/n Welle/n (6) in unterer Ruhelage des Antriebsgehäuses etwa parallel oder koaxial zum Wellenstumpf (10) der Halterung (8) verläuft/verlaufen, wobei gegebenenfalls das Hubmaß (h) für das von der Nockenscheibe (19) periodisch angehobene Antriebsgehäuse bestimmt ist vom Durchmesser des die Welle/n sowie gegebenenfalls an deren Ende/n vorgesehene Anformungen (22) umgebenden Becherteiles.

6. Vorrichtung nach wenigstens einem der Ansprüche 1 bis 5, dadurch gekennzeichnet, daß am Antriebsgehäuse (4) zwei an sich bekannte Knetwellen (6) mit ineinandergreifenden schraubenlinienförmigen Anformungen (22) angebracht sind.

7. Vorrichtung nach wenigstens einem der Ansprüche 1 bis 6, dadurch gekennzeichnet, daß die napfartige Halterung (8) in einer Mulde (12) des Sockelkastens (1) untergebracht ist und von letzterem nach oben wenigstens eine Tragsäule (2) abragt, deren oberer Fläche das Antriebsgehäuse (4) in seiner Ruhelage teilweise aufliegt, wobei gegebenenfalls an der oberen Fläche
der Tragsäule/n die Nocke (20) der Nockenscheibe
(19) während eines Teiles von deren Drehung herausragt.

8. Vorrichtung nach wenigstens einem der Ansprüche 1 bis
   10, dadurch gekennzeichnet, daß das Antriebsgehäuse
   (4) an der dem gegebenenfalls als Wegwerfbecher ausgebildeten Mischbecher (7) fernen Seite der Tragsäule
   (2) mit dieser durch ein Gelenk (3) verbunden und zu
   letzterem in Abstand die Nockenscheibe (19) angebracht
   ist.

9. Vorrichtung nach Anspruch 7 oder 8, dadurch gekennzeichnet, daß die obere Fläche der Tragsäule (2) zur
   Stellfläche (9) der Vorrichtung geneigt und etwa im
   rechten Winkel zum Wellenstumpf (10) angebracht ist.

10. Vorrichtung nach wenigstens einem der Ansprüche 1 bis
    9, dadurch gekennzeichnet, daß die Antriebe (4, 13,
    17) der Welle/n (6), der Halterung (8) und der Nockenscheibe (19) an einen gemeinsamen Schalter (14) angeschlossen sind, wobei gegebenenfalls wenigstens einer
    der Antriebe (4;13;17) mit einer Zeitsteuereinrichtung
    (15) verbunden und mit dieser die Mischzeit steuerbar
    ist.

11. Vorrichtung nach wenigstens einem der Ansprüche 1 bis
    10, dadurch gekennzeichnet, daß beim Umklappen des
    Antriebsgehäuses (4) die Welle/n (6) aus dem Misch-
    becher (7) führbar ist.

0012706

**Europäisches Patentamt**

**EUROPÄISCHER RECHERCHENBERICHT**

0012706

Nummer der Anmeldung

EP 79 710 012.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE – A – 2 227 589 (ELLNER)<br>* Ansprüche 1 bis 3; Fig. 1, Positionen 7, 6, 16, 1, 2, 9, 11, 5 *<br>— | 1,2,<br>8,11 |
|  | DE – A1 – 2 713 152 (KOPP)<br>* ganzes Dokument *<br>— | 1,2,<br>10 |
|  | GB – A – 1 475 981 (N.V. PHILIPS' GLOEILAMPENFABRIEKEN)<br>* Anspruch 1; Seite 1, Zeile 97 bis Seite 2, Zeile 13; Seite 2, Zeilen 28 bis 31; Fig., Positionen 11, 9, 3, 4 *<br>— | 1,8,<br>11 |
|  | DE – U – 7 213 810 (WANNINGER)<br>* Seiten 4 bis 6; Fig. I, Positionen 2, 3, 4, 5 *<br>— | 1,2,<br>10 |
|  | DE – U – 1 944 323 (C.M. HUTSCHEN-REUTHER ZAHNFABRIK)<br>* Ansprüche 1, 2; Seite 1, Absatz 2; Seite 2, letzter Absatz *<br>— | 1 |
|  | DE – U – 1 867 922 (RETSCH)<br>* Anspruch 1; Fig. 3 *<br>— ./.. | 3 |

**KLASSIFIKATION DER ANMELDUNG (Int.Cl.³)**

A 61 C   9/00

B 01 F   9/00

**RECHERCHIERTE SACHGEBIETE (Int. Cl.³)**

A 61 C   9/00

B 01 F   9/00

B 29 B   1/06

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 11-03-1980 | DROPMANN |

EPA form 1503.1  06.78

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE − B − 2 029 641 (VOLLRATH) <br> * Anspruch 1 * <br><br> −− | 6 |
| A | DE − U1 − 7 738 045 (HAUSCHILD) <br> * Seite 6 * <br><br> −− | |
| A | DE − A − 2 004 465 (FRANKONIA- <br> DENTALGESELLSCHAFT MBH & CO KG) <br> * Anspruch 1 * <br><br> −−−− | |

**KLASSIFIKATION DER ANMELDUNG (Int.Cl.)**

**RECHERCHIERTE SACHGEBIETE (Int. Cl.)**

EPA Form 1503.2   06.78